# EUROPÄISCHE PATENTSCHRIFT

(11) **EP 0 651 001 B1**
(45) Veröffentlichungstag und Bekanntmachung des Hinweises auf die Patenterteilung: **10.03.1999**
(21) Anmeldenummer: 94810610.9
(22) Anmeldetag: 24.10.1994
(51) Int. Cl.: C08J 3/22

(54) **Vernetzung von Polymeren**
Cross-linking of polymers
Réticulation de polymères

(30) Priorität: 03.11.1993 CH 3307/93
(43) Veröffentlichungstag der Anmeldung: 03.05.1995
(73) Patentinhaber: Henkel Kommanditgesellschaft auf Aktien, 40191 Düsseldorf (DE)
(72) Erfinder: Heese, Ulrich, CH-5243 Mülligen (CH); Salvel, Renato, CH-8052 Zürich (CH)

(56) Entgegenhaltungen:
- EP-A- 0 030 757
- EP-A- 0 210 306
- EP-A- 0 459 208
- DE-A- 2 213 202
- FR-A- 2 245 702

## Beschreibung

Die Erfindung bezieht sich auf ein Verfahren zur Herstellung von vernetzten Polymer-Formteilen aus thermoplastischen Basispolymeren in schüttfähiger Form, welche mit ebenfalls schüttfähigen, in den Basispolymeren dispergier- oder lösbaren Trägerpolymeren mit einem Vernetzungsmittel gemischt werden, diese miteinander kompatiblen Komponenten unter weiterem Mischen auf eine oberhalb des Schmelzbereichs des Basispolymeren liegende Reaktionstemperatur erwärmt und verarbeitet werden, wobei durch die Reaktion von freien Radikalen Bindungen zwischen Polymerketten entstehen und/oder Polymerketten abgebaut werden.

Polymere bestehen aus Molekülketten mit zahlreichen, sich praktisch endlos wiederholenden Bausteinen, welche sich in bezug auf die physikalischen Eigenschaften von den niedermolekularen Verbindungen unterscheiden, beispielsweise in bezug auf ihre hohe Zugfestigkeit und Elastizität. Durch Vernetzung der Polymerketten ändern sich viele Materialeigenschaften. Es können Werkstoffe entstehen, die den Ausgangsmaterialien in wesentlichen Punkten überlegen sind. Fast alle natürlichen und synthetischen Thermoplaste lassen sich vernetzen. Mit dem Begriff Thermoplasten bzw. thermoplastische Polymere sollen hier und im folgenden auch Elastomere, insbesondere thermoplastische, umfasst werden.

Freie Radikale haben ein oder mehrere ungepaarte Elektronen, beispielsweise das Methyl-Radikal H₃C^{·} oder das Triphenylmethyl-Radikal (C₆H₅)₃C^{·} sind seit langem bekannt. Radikalreaktionen sind Kettenreaktionen, sie werden durch kleine Mengen von reaktionsfähigen freien Radikalen eingeleitet und als Kettenreaktion aufrecht erhalten. Organische freie Radikale werden meist durch Erhitzen von Verbindungen mit schwachen kovalenten Bindungen hergestellt. So sind organische Peroxide, die an der schwachen O-O-Bindung leicht homolytisch gespalten werden können, Initiatoren für Radikalreaktionen. Zahlreiche organische Moleküle können durch sichtbares oder ultraviolettes Licht, unter Bildung von freien Radikalen, gespaltet werden. Häufig wird eine energiereichere Strahlung eingesetzt, beispielsweise β-Strahlung, welche auch Elektronenstrahlung genannt wird, oder γ-Strahlung.

Im Gegensatz zur Polymerisation verläuft eine Vernetzung stöchiometrischer und führt zu einer Vernetzungsausbeute.

Die mit einem Vernetzungsmittel oder durch Bestrahlung gebildeten freien Radikale können dem Polymeren ein Wasserstoffatom abziehen und sich dadurch absättigen. Dabei entsteht zugleich ein Polymer-Radikal mit einem ungepaarten Elektron. Zwei der so gebildeten Polymerradikale können sich unter Ausbildung einer neuen C-C-Bindung verknüpfen. Durch mehrmalige Wiederholung dieser Reaktion entsteht aus den ursprünglich linearen Polymerketten ein dreidimensionales Netzwerk.

Die Struktur der Basispolymeren hat einen Einfluss auf die Vernetzung. Neben der vorstehend erwähnten Kupplungsreaktion kann auch eine Aufspaltung der Polymerketten eintreten. Mit andern Worten werden manche Polymere unter Einwirkung von Radikalen nicht mit unveränderten Ketten verknüpft, sondern abgebaut und so vernetzt. Dies gilt vor allem für stark verzweigte Komponenten mit vielen tertiär gebundenen C-Atomen in der Hauptkette. Z.B. lassen sich Polypropylen (PP), Polybutylen (PB) und Polyvinylchlorid (PVC) nicht vernetzen, sie werden abgebaut. Dieser Abbau, auch Degradation genannt, wird im Rahmen der vorliegenden Erfindung mit dem Begriff vernetzen oder Vernetzung mitumfasst.

Die Herstellung von vernetzten Polymeren mit Hilfe von Silanen, wie sie beispielsweise in der EP,A2 0426073 beschrieben wird, werden nicht in die Aufgabenstellung der vorliegenden Erfindung einbezogen. Nach der EP,A2 0426073 wird ein vernetzbares Polymer in der Gegenwart eines Hydrolyse-Kondensationskatalysators gezielt der Feuchtigkeit ausgesetzt. Das Verfahren umfasst das Mischen eines thermoplastischen Basispolymeren mit einem im wesentlichen wasserfreien, festen Trägerpolymeren, welches ein Silan enthält, und einem freie Radikale erzeugenden Vernetzungsmittel. Diese Mischung wird auf eine Temperatur oberhalb des Schmelzpunkts des Basispolymeres erwärmt und weiter gemischt.

In der US,A 4247498 werden mikroporöse Trägerpolymere und ein Verfahren zu deren Herstellung beschrieben. Das mikroporöse Trägermaterial kann verhältnismässig grosse Mengen von "funktionell nützlichen Flüssigkeiten" aufnehmen und in seiner Natur ein Festkörper bleiben. Die mikroporösen Produkte werden aus synthetischen thermoplastischen Polymeren und mit diesen kompatiblen Flüssigkeiten hergestellt. Im Verlauf des Herstellungsverfahrens werden einige der kompatiblen Flüssigkeiten wieder entfernt. Die kompatiblen Flüssigkeiten können auch die vorstehend erwähnten funktionell nützlichen Flüssigkeiten sein, falls diese eine direkte Verwendung erlauben. In der US-A 4247498 werden keine derart in die Poren eingebrachten Vernetzungsmittel für Polymere erwähnt.

Die US,A 4783511 beschreibt ein Verfahren zur Herstellung von gegossenen Gegenständen aus trockenen thermoplastischen Polyamiden, welche verbesserte mechanische Eigenschaften und eine höhere Formfestigkeit als die Polyamid-Ausgangsmaterialien haben. Das Verfahren beinhaltet die Zugabe von trockenem Polyamid-"Masterbatch", welches ein Silan und ein Substrat, beispielsweise ein Polyolefin, ein schwellbares Material oder einen nicht schwellbaren thermoplastischen Schwamm, umfasst. Es werden drei Verfahren zur Herstellung eines "Masterbatches" beschrieben.

In EP-A-459208 werden nicht-extrudierte Konzentrate, bestehend aus einer Mischung von Peroxy-Verbindungen und Polypropylen, beschrieben. Das Konzentrat wird nach Verdünnung mit Polypropylen, bei 250°C in einem Doppelschneckenextruder extrudiert. Die hierzu einzuhalten den Druckbedingungen sind nicht offenbart.

Die Erfinder haben sich die Aufgabe gestellt, ein Verfahren der eingangs genannten Art zu schaffen, mit welchem vernetzte Polymere hoher Qualität, aber ohne Verwendung von Silanen einfach und kostengünstig hergestellt werden können.

Die Aufgabe wird erfindungsgemäss dadurch gelöst, dass porig ausgebildete Trägerpolymere, welche je wenigstens ein als silanfreies Vernetzungsmittel flüssig in die feinporige Struktur eingebrachtes organisches Peroxid und/oder Coagens aufweisen, in die Basispolymeren eingemischt werden und diese Mischung, in einem geschlossenem System bei einem Druck von wenigstens 3 bar und unter Luft abschluß verarbeitet. Spezielle und weiterbildende Ausführungsformen der Erfindung sind Gegenstand von abhängigen Patentansprüchen.

Die homolytische Spaltung der O-O-Bindung von organischen Peroxiden wird stets durch Wärme eingeleitet. Diese Zerfallsgeschwindigkeit ist bestimmend für die Gesamtreaktion. Die Halbwertszeiten des verwendeten Peroxids können daher als erster Anhaltspunkt für die erforderliche Vernetzungszeit betrachtet werden. Nach spätestens etwa zehn Halbwertszeiten ist die maximal mögliche Ausnutzung erreicht, weil das Peroxid praktisch vollständig zerfallen ist.

Organische Peroxide können als Flüssigkeit oder in Pulverform bezogen werden, letztere werden zum Chargieren der feinporösen Trägerpolymere geschmolzen oder gelöst und in die Hohlräume eingebracht. Besonders reaktive Peroxide werden aus Sicherheitsgründen mit Phlegmatisierungsmitteln verdünnt, was auch die Einarbeitung in die Poren erleichtern kann.

Durch Anheben der Temperatur wird der Peroxidzerfall, wie vorstehend angedeutet, beschleunigt, nach einer Faustregel etwa das zwei- bis dreifache pro 10°C. Die optimale Reaktionstemperatur ergibt sich anwendungsspezifisch aus dem Polymertyp und und Peroxidtyp, sie liegt in der Praxis bei wenigstens etwa 120°C, vorzugsweise im Bereich von 150 bis 250°C.

Die ebenfalls anwendungsspezifisch zu ermittelnde Peroxiddosierung beeinflusst in erster Linie den Vernetzungsgrad, weniger die Vernetzungsgeschwindigkeit. Optimale Vernetzungsgrade haben sich bei einer zugegebenen Peroxidmenge im Bereich von 0,5 bis 10 Gew.%, bezogen auf das Polymere, je nach Peroxidtyp, Lieferform und Zusammensetzung des Reaktionsgemisches, ergeben.

Mischungen mit peroxidhaltigen Trägerpolymeren werden zur Erzeugung von freien Radikalen auf eine Temperatur von vorzugsweise wenigstens etwa 120°C, inbesondere 180 - 280°C, erwärmt.

Die Mischungen der thermoplastischen Basispolymeren und peroxidhaltigen Trägerpolymeren werden vorzugsweise in einem geschlossenen System erwärmt. Dieses steht bei entsprechender Natur des Peroxids mindestens unter Luftabschluss, zweckmässig mit Zugabe eines inerten Gases und/oder eines Sauerstoffinhibitors. In diesem geschlossenen System stehen die Mischungen bevorzugt unter einem Druck von wenigstens etwa 3 bar, vorzugsweise von wenigstens etwa 10 bar. Dieser Druck ist hinreichend hoch, um die sich bildenden Gase in Lösung zu halten.

Von wesentlicher Bedeutung für die Eignung eines organischen Peroxids als Vernetzungsmittel ist die chemische Struktur der Basispolymeren. Diese gibt vorerst die Art der Bruchstücke beim Zerfall in Radikale und die Fähigkeit des Peroxids zum Abspalten von Wasserstoffatomen aus der Polymerkette vor. Die nachstehend aufgelistet flüssigen oder lösbaren Peroxide haben sich als besonders vorteilhaft erwiesen:
Tert. Butylcumylperoxid (BCUP); 2, 5-Dimethyl-2,5-di (tert. Butylperoxy) Hexan (DHBP); Di(tert. Butyl) Peroxid (DTBP); 2,5-Dimethyl-2,5-di(tert. Butylperoxy) Hexin (DYBP); Dicumylperoxid (DCUP).

Diese beispielsweise erwähnten Peroxide können sowohl einzeln als auch als Gemisch eingesetzt werden.

Die Massetemperatur darf während des Mischvorgangs nicht zu stark ansteigen, weil sonst oberhalb der sogenannten Scorch-Temperatur eine unerwünschte Vorvernetzung eintreten kann. Dies wird vorzugsweise durch entsprechendes Kühlen der Reaktionsvorrichtung vermieden.

Der Vernetzungsgrad kann verbessert werden, wenn dem Reaktionsgemisch Coagentien beigemischt werden, welche in den Vernetzungsgang eingreifen und dadurch die Anzahl der Verknüpfungspunkte zwischen den Polymerketten oder den Aufspaltungsgrad erhöhen. Es ist jedoch zu beachten, dass bei Zugabe von Coagentien wohl der Peroxidbedarf erniedrigt, aber andrerseits eine unerwünschte Vorvernetzung begünstigt werden kann.

Nach einer erfindungsgemässen Variante können Coagentien auch ohne Peroxide zugegeben werden. In diesem Fall ist nicht eine Temperaturerhöhung, sondern eine Bestrahlung erforderlich, damit die Coagentien freie Radikale bilden, welche die Polymerketten miteinander vernetzen oder diese degradieren. Mischungen mit coagentienhaltigen Trägerpolymeren können bei schwächeren Bindungen mit sichtbarem oder ultraviolettem Licht bestrahlt und gespalten werden, bei stärkeren Bindungen werden vorzugsweise die energiereicheren β- oder γ-Strahlen eingesetzt. β-Strahlen werden auch Elektronenstrahlen genannt. Die weiteren Reaktionsabläufe der freien Radikale entsprechen weitgehend den peroxidinduzierten Reaktionen. Bei einer Elektronenstrahlvernetzung von Polymeren durch Coagentien kann das Fliessverhalten der Kunststoffschmelze günstig beeinflusst werden, beispielsweise beim Einsatz von Trimethylpropantrimethacrylat (TRIM).

Coagentien, welche in den Poren der Trägerpolymere in die Basispolymere eingemischt werden, sind vorzugsweise Methacrylate, Acrylate und/oder Allylverbindungen. Dabei haben sich insbesondere Trägerpolymere mit ÄthylenglycolDimethacrylat (EDMA), Trimethylolpropantrimethacrylat (TRIM/TMPT), Butylenglycoldimethacrylat (BDMA), Tirmethylolpropantriacrylat (TMPTA), Triallylcyanurat (TAC), Triallylisocyanurat (TAIC), Triallylphosphat (TAP), Triallyltrimellitat (TATM) und/oder Diallylphthalat (DAP) als vorteilhaft erwiesen.

Die radikalbildenden Peroxide und/oder Coagentien werden zweckmässig mit einer Konzentration von 5 bis 80 Gew.-%, vorzugsweise 10 bis 60 Gew.-%, auf den Träger chargiert und vorzugsweise in einer Konzentration von 0,05 bis 5 Gew.-%, insbesondere von 0,1 bis 3 Gew.-%, bezogen auf das Basispolymer, eingemischt. Diese Werte sind selbst für den gleichen Vernetzungsgrad verhältnismässig breit gestreut und im wesentlichen substanz abhängig.

Die eingesetzten Basispolymere, welche erfindungsgemäss vernetzt werden, umfassen beispielsweise die folgenden vier Gruppen:
- Ein Homopolymer aus einem α-Olefin mit 2 - 8 Kohlenstoffatomen oder ein Copolymerisat von zwei entsprechenden α-Olefinen, vorzugsweise Copolymerisate aus Äthylen, auch als Homopolymerisat niedriger (LDPE), linear niedriger (LLDPE), sehr niedriger (VLDPE), ultraniedriger (ULDPE) oder hoher Dichte (HDPE), Propylen, auch als Homopolymerisat, 1-Butylen, 1-Pentylen, 1-Hexylen, 1-Octylen, Isobutylen, 2-Methyl-1-Butylen, 3-Methyl-1-Pentylen, 4-Methyl-1-Pentylen, 2,3-Dimethyl-1-Butylen, 2-Äthyl-1-Butylen, und Mischungen davon
- Ein Copolymerisat von Äthylen mit 1-Butylen, 1-Hexylen, 1-Octylen oder 4-Methyl-1-Pentylen
- Ein Äthylenvinylacetat-Copolymerisat, ein Äthylenäthylacetat-Copolymerisat, ein Äthylenacrylisäurecopolymerisat und Mischungen davon oder mit Copolymeren von Äthylen und 1-Butylen, 1-Hexylen, 1-Octylen oder 4-Methyl-1-Pentylen - Äthylenpropylengummi (EPDM), auch dienmodifiziert (EPR), ein Styrol-Butadien-Styrol-Copolymerisat (SBS), ein Styrol-Äthylen-Bytylen-Styrol-Copolymerisat (SEBS) und Mischungen davon.

Die Basispolymere liegen in der Praxis granalien- oder pelletförmig vor, sie sind gut schütt- und rieselfähig und daher zum Mischen mit kompatiblen Trägerpolymeren bestens geeignet.

Die in die Basispolymeren eingemischten, chargierten Trägerpolymere haben eine feine porige Struktur, welche vorzugsweise wenigstens teilweise offenporig ist. Diese Trägerpolymere werden bezüglich der Herstellung und der physikalischen Eigenschaften beispielsweise in der US,A 4247498 beschrieben. Die Trägerpolymere müssen mit den Basispolymeren kompatibel sein, sie bestehen vorzugsweise aus derselben Substanz. In der industriellen Praxis sind dies beispielsweise Polyäthylen mit hoher (HDPE), niedriger (LDPE) oder linear niedriger (LLDPE) Dichte, Äthylvinylacetat-Copolymerisat (EVA) und Mischungen davon. Wie die Basispolymere sind die Trägerpolymere ebenfalls bevorzugt als schüttfähige Granalien oder Pellets ausgebildet.

Die Trägerpolymere werden vorzugsweise in einem Anteil von 0,1 bis 25 Gew.-%, insbesondere 1 bis 10 Gew.-%, bezogen auf die Mischung, in die Basispolymere eingemischt.

Die feinporösen Trägerpolymere enthalten in der industriellen Praxis neben den Peroxiden und/oder Coagentien verwendungsbezogen zusätzliche Komponenten, wie Stabilisatoren, Gleitmittel und/oder Verarbeitungshilfen. Als Stabilisatoren werden beispielsweise Antioxidantien, Lichtschutzmittel und/oder Wärmeschutzmittel bezeichnet, die Gleitmittel und Verarbeitungshilfen sind beispielsweise Säureamide, Fettsäureester, Fettalkohole, Metallseifen, Siliconderivate und/oder Fluorverbindungen. Weitere Zusätze können Farbpigmente oder anorganische Füllstoffe sein.

Die Vorrichtungen zur Durchführung des erfindungsgemässen Verfahrens sind an sich bekannt. Die Komponenten werden nacheinander in einem Mischextruder, auf einem Walzenstuhl, in einem Schneckenkneter, einem Innenmischer oder einem Rührwerk in die Basispolymere eingearbeitet. Die Weiterverarbeitung erfolgt ebenfalls in an sich bekannter Weise, z.B. durch Giessen, Spritzen, Ziehen, Pressen, Sintern, Kalandrieren und/oder Pelletisieren.

Mit dem erfindungsgemässen Verfahren können der Spannungsmodul, die Elastizität, der Druckverformungsrest, die bleibende Dehnung, die Beständigkeit gegen Spannungsriss-Korrosion, Alterung, Wärme, Kälte und organische Lösungsmittel durch Variation der Parameter verbessert werden. Dabei ist zu beachten, dass die optimalen Eigenschaften oft nicht erst bei einem maximalen Vernetzungsgrad erreicht werden. Die günstigste Einstellung aller Parameter für die gewünschte Eigenschaftskombination muss daher mit fachmännischem Wissen und Können fallweise sehr sorgfältig ermittelt werden.

Die industrielle Verwendung der nach dem erfindungsgemässen Verfahren hergestellten vernetzten Polymere, wie erwähnt die Elastomere eingeschlossen, liegt z.B. bei Kabel- und Mantelisolationen, Rohren für Heisswasserleitungen und hochbeanspruchten Spritzgussteilen.

## Patentansprüche

1. Verfahren zur Herstellung von vernetzten Polymer-Formteilen aus thermoplastischen Basispolymeren in schüttfähiger Form, welche mit ebenfalls schüttfähigen, in den Basispolymeren dispergier- oder lösbaren Trägerpolymeren mit einem Vernetzungsmittel gemischt werden, diese miteinander kompatiblen Komponenten unter weiterem Mischen auf eine oberhalb des Schmelzbereichs des Basispolymeren liegende Reaktionstemperatur erwärmt und verarbeitet werden, wobei durch die Reaktion von freien Radikalen Bindungen zwischen Polymerketten entstehen und/oder Polymerketten abgebaut werden, dadurch gekennzeichnet, daß man in ein Basispolymer ein porig ausgebildetes Trägerpolymer, das wenigstens ein als silanfreies Vernetzungsmittel flüssig in die feinporige Struktur eingebrachtes organisches Peroxid und/oder Coagens enthält, einmischt und diese Mischung in einem geschlossenem System bei einem Druck von wenigstens 3 bar und unter Luftabschluß verarbeitet.

2. Verfahren nach Anspruch 1, dadurch gekennzeichnet, dass Mischungen mit peroxidhaltigen Trägerpolymeren zur Erzeugung von freien Radikalen auf eine Temperatur von wenigstens etwa 120°C, erwärmt werden.

3. Verfahren nach Anspruch 1 oder 2, dadurch gekennzeichnet, daß man die Mischungen unter Zugabe eines inerten Gases erwärmt.

4. Verfahren nach einem der Ansprüche 2 oder 3, dadurch gekennzeichnet, daß man die Mischungen bei einem Druck von wenigstens 10 bar erwärmt.

5. Verfahren nach einem der Ansprüche 1 bis 4, dadurch gekennzeichnet, dass Mischungen mit coagentienhaltigen Trägerpolymeren zur Erzeugung von freien Radikalen bestrahlt werden.

6. Verfahren nach einem der Ansprüche 1 bis 5, dadurch gekennzeichnet, dass als Basispolymere
- ein Homopolymer aus einem α-Olefin mit 2 - 8 Kohlenstoffatomen oder ein Copolymerisat von zwei entsprechenden α-Olefinen, vorzugsweise Copolymerisate aus Äthylen, auch als Homopolymerisat niedriger (LDPE), linear niedriger (LLDPE), sehr niedriger (VLDPE), ultraniedriger (ULDPE) und hoher Dichte (HDPE), Propylen, auch als Homopolymerisat, 1-Butylen, 1-Pentylen, 1-Hexylen, 1-Octylen, Isobutylen, 2-Methyl-1-Butylen, 3-Methyl-1-Pentylen, 4-Methyl-1-Pentylen, 2,3-Dimethyl-1-Butylen, 2-Äthyl-1-Butylen, auch Mischungen davon, oder
- ein Copolymerisat von Äthylen mit 1-Butylen, 1-Hexylen, 1-Octylen oder 4-Methyl-1-Pentylen, oder
- ein Äthylenvinylacetat-Copolymerisat, ein Äthylenäthylacetat-Copolymerisat, ein Äthylenacrylisäurecopolymerisat und Mischungen davon oder mit Copolymeren von Äthylen und 1-Butylen, 1-Hexylen, 1-Octylen oder 4-Methyl-1-Pentylen, oder
- Äthylenpropylengummi (EPDM), auch dienmodifiziert (EPR), ein Styrol-Butadien-Styrol-Copolymerisat (SBS), ein Styrol-Äthylen-Bytylen-Styrol-Copolymerisat (SEBS), auch Mischungen davon,
eingesetzt werden.

7. Verfahren nach einem der Ansprüche 1 bis 6, dadurch gekennzeichnet, dass die vorzugsweise aus der gleichen Substanz wie das Basispolymer bestehenden Trägerpolymere in einem Anteil von 0,1 - 25 Gew.-%, bezogen auf die Mischung, in das Basispolymer gegeben werden.

8. Verfahren nach einem der Ansprüche 1 bis 7, dadurch gekennzeichnet, dass die Trägerpolymere mit einem flüssigen oder verflüssigbaren Peroxid, dessen Schmelzpunkt unterhalb dem Zersetzungspunkt liegt, eingemischt werden, vorzugsweise mit tert. Butylcumylperoxid (BCUP); 2,5-Dimethyl-2,5-di(tert. Butylperoxy) Hexan (DHBP); Di(tert. Butyl) Peroxid (DTBP); 2,5-Dimethyl-2,5-di(tert. Butylperoxy) Hexin (DYBP); Dicumylperoxid (DCUP), auch Mischungen davon, eingesetzt werden, auch mit einem Phlegmatisierungsmittel.

9. Verfahren nach einem der Ansprüche 1 bis 8, dadurch gekennzeichnet, dass Trägerpolymere mit einem flüssigen oder verflüssigbaren Coagent eingemischt werden, vorzugsweise mit Methacrylaten, Acrylaten und/oder Allylverbindungen, insbesondere mit Äthylenglycol-Dimethacrylat (EDMA), Trimethylolpropantrimethacrylat 7. (TRIM/TMPT), Butylenglycoldimethacrylat (BDMA), Trimethylolpropantriacrylat (TMPTA), Triallylcyanurat (TAC), Triallylisocyanurat (TAIC), Triallylphosphat (TAP), Triallyltrimellitat (TATM) und/oder Diallylphthalat (DAP).

10. Verfahren nach Anspruch 8 oder 9, dadurch gekennzeichnet, dass die Peroxide und/oder Coagentien mit einer Konzentration von 5 bis 80 Gew.-%, vorzugsweise von 10 bis 60 Gew.-%, auf den Träger chargiert und in einer Konzentration von 0,05 bis 5 Gew.-%, bezogen auf das Basispolymer, eingemischt werden.

11. Verfahren nach einem der Ansprüche 1 bis 9, dadurch gekennzeichnet, dass feinporöse Trägerpolymere mit zusätzlich chargierten Stabilisatioren, Gleitmitteln und/oder Verarbeitungshilfen eingemischt werden.

## Claims

1. A process for the production of crosslinked polymeric mouldings based on pourable thermoplastic polymers which are mixed with pourable carrier polymers dispersible or soluble in the basic polymers with a crosslinking agent and these mutually compatible components are heated with continued mixing to a reaction temperature above the melting range of the basic polymer and processed at that temperature, the reaction of free radicals forming bonds between polymer chains and/or breaking down polymer chains, characterized in that a porous carrier polymer which contains at least one organic peroxide and/or coagent introduced in liquid form into the fine-pore structure as a silane-free crosslinking agent is incorporated in the basic polymer by mixing and the resulting mixture is processed in the absence of air in a closed system under a pressure of at least 3 bar.

2. A process as claimed in claim 1, characterized in that mixtures with peroxide-containing carrier polymers are heated to a temperature of at least about 120°C to generate free radicals.

3. A process as claimed in claim 1 or 2, characterized in that the mixtures are heated in the presence of an added inert gas.

4. A process as claimed in claim 2 or 3, characterized in that the mixtures are heated under a pressure of at least 10 bar.

5. A process as claimed in any of claims 1 to 4, characterized in that mixtures with coagent-containing carrier polymers are irradiated to generate free radicals.

6. A process as claimed in any of claims 1 to 5, characterized in that the basic polymer is selected from
- a homopolymer of an α-olefin containing 2 to 8 carbon atoms or a copolymer of two corresponding α-olefins, preferably copolymers of ethylene, even as a low-density homopolymer (LDPE), linear low-density homopolymer (LLDPE), very low-density homopolymer (VLDPE), ultra-low density homopolymer (ULDPE) and high-density homopolymer (HDPE), propylene, even as a homopolymer, 1-butylene, 1-pentylene, 1-hexylene, 1-octylene, isobutylene, 2-methyl-1-butylene, 3-methyl-1-pentylene, 4-methyl-1-pentylene, 2,3-dimethyl-1-butylene, 2-ethyl-1-butylene and mixtures thereof or
- a copolymer of ethylene with 1-butylene, 1-hexylene, 1-octylene or 4-methyl-1-pentylene or
- an ethylene/vinyl acetate copolymer, an ethylene/ethyl acetate copolymer, an ethylene/acrylonitrile copolymer and mixtures thereof or with copolymers of ethylene and 1-butylene, 1-hexylene, 1-octylene or 4-methyl-1-pentylene or
- ethylene/propylene rubber (EPDM), even diene-modified (EPR), a styrene/butadiene/styrene copolymer (SBS), a styrene/ethylene/butylene/styrene copolymer (SEBS) and mixtures thereof.

7. A process as claimed in any of claims 1 to 6, characterized in that the carrier polymers, which preferably consist of the same substance as the basic polymer, are added to the basic polymer in a quantity of 0.1 to 25% by weight, based on the mixture.

8. A process as claimed in any of claims 1 to 7, characterized in that the carrier polymers are added with a liquid or liquefiable peroxide which has a melting point below the decomposition point, preferably with tert. butylcumyl peroxide (BCUP); 2,5-dimethyl-2,5-di-(tert.butylperoxy)-hexane (DHBP); di-(tert.butyl)-peroxide (DTBP); 2,5-dimethyl-2,5-di-(tert.butylperoxy)-hexine (DYBP); dicumyl peroxide (DCUP) and mixtures thereof, even with a desensitizing agent.

9. A process as claimed in any of claims 1 to 8, characterized in that carrier polymers are added with a liquid or liquefiable coagent, preferably with methacrylates, acrylates and/or allyl compounds, more especially with ethylene glycol dimethacrylate (EDMA), trimethylolpropane trimethacrylate (TRIM/TMPT), butylene glycol dimethacrylate (BDMA), trimethylolpropane triacrylate (TMPTA), triallyl cyanurate (TAC), triallyl isocyanurate (TAIC), triallyl phosphate (TAP), triallyl trimellitate (TATM) and/or diallyl phthalate (DAP).

10. A process as claimed in claim 8 or 9, characterized in that the peroxides and/or coagents are applied to the carried in a concentration of 5 to 80% by weight and preferably 10 to 60% by weight and are added in a concentration of 0.05 to 5% by weight, based on the basic polymer.

11. A process as claimed in any of claims 1 to 9, characterized in that fine-pore carrier polymers are added with additionally applied stabilizers, lubricants and/or processing aids.

## Revendications

1. Procédé de préparation de pièces usinées en polymère réticulé, à partir de polymères de base thermoplastique sous forme apte à l'agitation, lesquels sont mélangés avec des polymères support, dispersibles ou solubles dans le polymère de base, également aptes à l'agitation, avec un agent de réticulation, ces composants compatibles les uns avec les autres sont chauffés et traités tout en continuant à mélanger, à une température de réaction située au-dessus du domaine de fusion du polymère de base, où par la réaction des radicaux libres, des liaisons se forment entre les chaînes polymères et/ou les chaînes polymères sont dégradées, caractérisé en ce que l'on introduit dans un polymère de base, un polymère support poreux formé, qui contient au moins un peroxyde organique et/ou coagent liquide, introduit dans la structure à pores fins comme agent de réticulation exempt de silane, et ce mélange est traité dans un système fermé à une pression d'au moins 3 bar et en l'absence d'air.

2. Procédé suivant la revendication 1, caractérisé en ce que les mélanges du polymère support contenant des peroxydes sont chauffés à une température d'au moins environ 120°C pour produire les radicaux libres.

3. Procédé suivant la revendication 1 ou 2, caractérisé en ce que l'on chauffe les mélanges sous un gaz inerte.

4. Procédé suivant l'une quelconque des revendications 2 ou 3, caractérisé en ce que l'on chauffe les mélanges à une pression d'au moins 10 bar.

5. Procédé suivant l'une quelconque des revendications 1 à 4, caractérisé en ce que les mélanges du polymère support contenant des coagents sont irradiés pour produire des radicaux libres.

6. Procédé suivant l'une quelconque des revendications 1 à 5, caractérisé en ce que l'on met en oeuvre, comme polymère de base:
- un homopolymère d'une alpha-oléfine ayant 2 à 8 atomes de carbone ou un copolymère de deux alpha-oléfines appropriées, de préférence des copolymères d'éthylène, ainsi que les homopolymères à faible densité (LDPE), linéaire à faible densité (LLDPE), à très faible densité (VLDPE), à ultrafaible densité (ULDPE) ou à haute densité (HDPE), de propylène, ainsi que les homopolymères, de 1-butylène, 1-pentylène, 1-hexylène, 1-octylène, isobutylène, 2-méthyl-1-butylène, 3-méthyl-1-pentylène, 4-méthyl-1-pentylène, 2,3-diméthyl-1-butylène, 2-éthyl-1-butylène et leurs mélanges;
- un copolymère d'éthylène avec le 1-butylène, 1-hexylène, 1-octylène ou 4-méthyl-1-pentylène;
- un copolymère d'éthylène-acétate de vinyle, un copolymère d'éthylène-acétate d'éthyle, un copolymère d'éthylène-acide acrylique et leurs mélanges ou avec des copolymères d'éthylène avec le 1-butylène, 1-hexylène, 1-octylène ou le 4-méthyl-1-pentylène, ou
- le caoutchouc éthylène-propylène (EPDM), de même que celui qui est modifié par des diènes (EPR), un copolymère styrène-butylène-styrène (SBS), un copolymère styrène-éthylène-butylène-styrène (SEBS) et leurs mélanges.

7. Procédé suivant l'une quelconque des revendications 1 à 6, caractérisé en ce que le polymère support consistant de préférence en la même substance que le polymère de base, est ajouté au polymère de base en une quantité de 0,1 à 25% en poids, sur base du mélange.

8. Procédé suivant l'une quelconque des revendications 1 à 7, caractérisé en ce que le polymère support est mélangé à un peroxyde liquide ou liquéfiable, dont le point de fusion se situe en dessous du point de décomposition, de préférence avec le t-butylcumylperoxyde (BCUP); le 2,5-diméthyl-2,5-di(t-butylperoxy)hexane (DHBP); le di(t-butyl)peroxyde (DTBP); le 2,5-diméthyl-2,5-di(t-butylperoxy)hexyne (DYBP); le dicumylperoxyde (DCUP), et leurs mélanges, ainsi qu'avec un agent de stabilisation.

9. Procédé suivant l'une quelconque des revendications 1 à 8, caractérisé en ce que le polymère support est mélangé à un coagent liquide ou liquéfiable, de préférence des composés méthacrylate, acrylate et/ou allyle, en particulier le diméthacrylate d'éthylèneglycol (EDMA), le triméthacrylate de triméthylolpropane (TRIM/TMPT), le diméthacrylate de butylèneglycol (BDMA), le triacrylate de triméthylolpropane (TMPTA), le cyanurate de triallyle (TAC), l'isocyanurate de triallyle (TAIC), le phosphate de triallyle (TAP), le trimellitate de triallyle (TATM) et/ou le phtalate de diallyle (DAP).

10. Procédé suivant la revendication 8 ou 9, caractérisé en ce que le peroxyde et/ou le coagent sont chargés sur le support, avec une concentration comprise dans l'intervalle allant de 5 à 80% en poids, de préférence de 10 à 60% en poids, et incorporés en une concentration de 0,05 à 5% en poids, sur base du polymère de base.

11. Procédé suivant l'une quelconque des revendications 1 à 9, caractérisé en ce que le polymère support finement poreux est mélangé à des stabilisants, lubrifiants et/ou produits auxiliaires chargés de manière supplémentaire.
